# EUROPEAN PATENT APPLICATION

(11) **EP 2 383 328 A1**
(43) Date of publication of application: **02.11.2011**
(21) Application number: 10733573.9
(22) Date of filing: 22.01.2010
(51) Int. Cl.: C10M 107/10, C10N 30/02, C10N 30/06, C10N 30/08, C10N 30/10, C10N 40/00, C10N 70/00

(54) **LUBRICANT FOR GEARS**

(30) Priority: 23.01.2009 JP 2009013312
(71) Applicant: Idemitsu Kosan Co., Ltd., Chiyoda-ku Tokyo 100-8321 (JP)
(72) Inventor: OKADA, Tahei, Ichihara-shi Chiba 299-0107 (JP)
(74) Representative: HOFFMANN EITLE
(86) International application number: PCT/JP2010/050833
(87) International publication number: WO 2010/084966

(57) **Abstract**

The invention provides a lubricating oil for gears which contains an α-olefin polymer having a viscosity index of 175 or higher and which has a viscosity index of 170 or higher. The lubricating oil for gears which has high shear stability and high oxidation resistance and which prevents malfunction during start-up at low temperature.

## Description

### Technical Field

The present invention relates to a lubricating oil for gears and, more particularly, to a lubricating oil for gears containing an α-olefin polymer having a high viscosity index.

### Background Art

In recent years, demand for utilization of natural energy has attracted considerable attention to cope with environmental issues and possible exhaustion of fossil fuels. For example, an increasing numbers of countries and regions have come to employ wind power generation. In wind power generation, kinetic energy of wind is transformed into electric energy by means of rotors including propellers which are rotated by wind. In general, a wind power generator does not operate continuously. That is, when the wind velocity falls outside a range allowing power generation, the wind power generator is stopped, whereas when the wind velocity falls within that range, the generator is restarted. In wind power generation, a step-up gear is employed to elevate power generation efficiency, and a step-up gear oil is used for lubrication of the gear.

One known step-up gear oil for wind power generation, disclosed in Patent Document 1, is a lubricating oil which contains specific additives, which is excellent in seizure resistance and fatigue resistance, and which forms only a reduced amount of sludge. However, wind power generation is increasingly considered promising these days, a step-up gear oil having higher performance is desired. Specifically, a wind power generator may be installed at sites where temperature varies greatly; e.g., deserts and extremely cold areas. In such a case, when a step-up gear oil having high viscosity measured at low temperature is used, the discharge pressure of a circulating pump increases excessively during start-up at low temperature, readily causing problematic malfunction. Generally, conventionally employed step-up gear oils have a viscosity index of about 140, and the employable limit in low temperature is thought to be about -20°C. In order to further increase the sites available for installing a wind power generator in the future, the viscosity of a step-up gear oil at low temperature is preferably lowered. For example, when the step-up gear oil has a viscosity index of 170 or higher, the employable low-temperature limit is thought to be lowered by about 10°C.

One conceivable and general approach to enhance the viscosity index of a lubricating oil is addition of a viscosity index improver. However, addition of a high-molecular-weight polymer having low shear stability to a step-up gear oil is not preferred, since such a polymer imposes high load on the step-up gear. In the case where a polymer having lower molecular weight is used, use of an olefin copolymer encounters difficulty in elevating viscosity index, and use of PMA (polymethacrylate) readily causes a drop in viscosity attributed to shear force, along with a drop in oxidation resistance.
Thus, there is demand for a lubricating oil for gears which can be suitable employed with a step-up gear for wind power generation or a similar means.

### Prior Art Documents

### Patent Documents

Patent Documents 1: WO 2008/038701

### Disclosure of the Invention

### Problems to be Solved by the Invention

The present invention has been conceived under such circumstances. Thus, an object of the invention is to provide a lubricating oil for gears which has high stability against shear (hereinafter referred to as shear stability) and high oxidation resistance and which prevents malfunction during start-up at low temperature.

### Description of Embodiments

### Means for Solving the Problems

The present inventor has carried out extensive studies, and has found that the object can be attained by a lubricating oil containing a specific α-olefin polymer. The present invention has been accomplished on the basis of this finding. Accordingly, the present invention provides the following.
1. A lubricating oil for gears which contains an α-olefin polymer having a viscosity index of 175 or higher and which has a viscosity index of 170 or higher.
2. A lubricating oil for gears which contains an α-olefin polymer having a viscosity index of 180 or higher and which has a viscosity index of 175 or higher.
3. A lubricating oil for gears according to 1 or 2 above, wherein the α-olefin polymer is produced by polymerizing a C6 to C20 α-olefin.
4. A lubricating oil for gears according to any of 1 to 3 above, wherein the α-olefin polymer is produced in the presence of a metallocene catalyst.
5. A lubricating oil for gears according to 4 above, wherein the metallocene catalyst includes (A) a transition metal compound represented by formula (I):

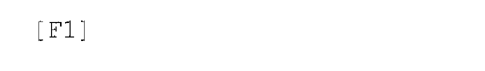

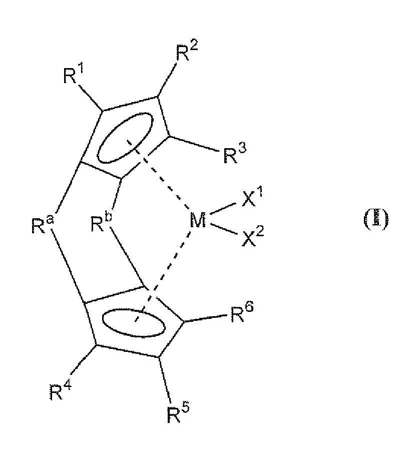

(wherein each of R¹ to R⁶ represents a hydrogen atom, a halogen atom, a C1 to C20 hydrocarbyl group, or a C1 to C20 organic group containing at least one element selected from among a halogen atom, a silicon atom, an oxygen atom, a sulfur atom, a nitrogen atom, and a phosphorus atom; at least one group selected from among R¹ to R³ is a hydrogen atom; at least one group selected from among R⁴ to R⁶ is a hydrogen atom; each of R^{a} and R^{b} represents a divalent group formed though bonding of two cyclopentadienyl rings via 1 to 3 atoms; each of X¹ and X² represents a hydrogen atom, a halogen atom, a C1 to C20 hydrocarbyl group, or a C1 to C20 organic group containing at least one element selected from among a halogen atom, a silicon atom, an oxygen atom, a sulfur atom, a nitrogen atom, and a phosphorus atom; and M represents a transition metal belonging to group 4 to group 6 in the periodic table) and (B) an organic aluminumoxy compound (b-1) and/or an ionic compound (b-2) which can transform into a cation through reaction with the transition metal compound.
6. A lubricating oil for gears according to any of 1 to 5 above, which is a lubricating oil for use with a step-up gear for wind power generation.

### Effects of the Invention

The present invention enables provision of a lubricating oil for gears which has a high viscosity index, high shear stability, and high oxidation resistance. The lubricating oil is preferably employed with a step-up gear for wind power generation.

### Modes for Carrying Out the Invention

The lubricating oil for gears of the present invention contains an α-olefin polymer for gears having a viscosity index of 175 or higher. No particular limitation is imposed on the α-olefin polymer used in the present invention, and any α-olefin polymer may be used so long as the polymer has a viscosity index of 175 or higher. When the α-olefin polymer has a viscosity index of 175 or higher, the viscosity index of the lubricating oil for gears can be readily adjusted to 170 or higher. Thus, the viscosity index of the α-olefin polymer is preferably 180 or higher, more preferably 190 or higher. In the present invention, no particular limitation is imposed on the upper limit of the viscosity index of the α-olefin polymer. However, an α-olefin polymer having a viscosity index of 300 or less is generally employed. The viscosity index of the lubricating oil for gears is more preferably 175 or higher.

The kinematic viscosity of the α-olefin polymer measured at 100°C is preferably 20 to 200 mm²/s. When the kinematic viscosity measured at 100°C falls within the range, the α-olefin can be employed as a suitable ingredient of the lubricating oil for gears. Thus, the kinematic viscosity of the α-olefin polymer measured at 100°C is more preferably 25 to 150 mm²/s, particularly preferably 30 to 110 mm²/s.
The kinematic viscosity of the α-olefin polymer measured at 40°C is generally 270 to 450 mm²/s, and such an α-olefin polymer can be employed as a suitable ingredient of the lubricating oil for gears.

The α-olefin polymer generally has a triad isotacticity (in α-olefin unit chain) of 20 to 40%, preferably 25 to 35%. The syndiotacticity thereof generally 40% or less, preferably 15 to 35%. When the α-olefin polymer has the aforementioned stereoregularity, the polymer readily possesses excellent physical characteristics at low-temperature.

For the production of the α-olefin polymer, one or more C6 to C20 α-olefins are generally employed as raw material monomers (α-olefins) . Examples of such C6 to C20 α-olefins include 1-hexene, 4-methyl-1-pentene, 1-heptene, 1-octene, 1-nonene, 1-decene, 1-undecene, 1-dodecene, 1-trideoene, 1-tetradecene, 1-pentadecene, 1-hexadecene, 1-heptadecene, 1-octadecene, 1-nonadecene, and 1-eicocene. Of these, one or more species are employed. Among these olefins, readily available and inexpensive C6 to C14 olefins are more preferred, with C8 to C12 olefins being particularly preferred.

The amount of the α-olefin polymer incorporated into the lubricating oil for gears is generally 70 to 95 mass% with respect to the total amount of the lubricating oil, preferably 80 to 90 mass%.

The aforementioned α-olefin polymer may be produced through, for example, polymerizing an α-olefin in the presence of a metallocene catalyst. Examples of preferred metallocene catalysts include a catalyst formed of (A) a transition metal compound represented by formula (I):

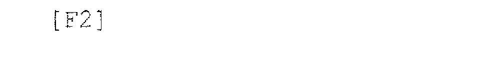

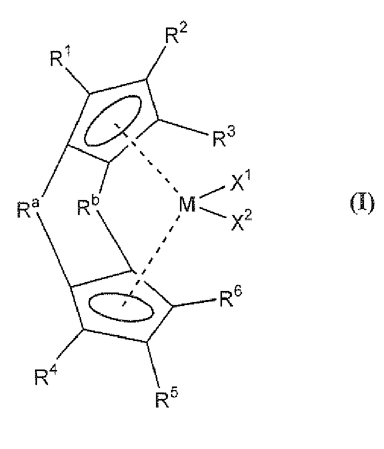

and (B) an organic aluminumoxy compound (b-1) and/or an ionic compound (b-2) which can transform into a cation through reaction with the transition metal compound.

The transition metal compound represented by formula (I) is a transition metal compound which is a double-crosslinked bis(cyclopentadienyl) metallocene complex. In formula (I), each of R¹ to R⁶ represents a hydrogen atom, a halogen atom, a C1 to C20 hydrocarbyl group, or a C1 to C20 organic group containing at least one element selected from among a halogen atom, a silicon atom, an oxygen atom, a sulfur atom, a nitrogen atom, and a phosphorus atom. The case where the metallocene complex is a complex having as a ligand a condensed cyclopentadienyl group; such as a double-crosslinked bis(indenyl) metallocene complex is not preferred, since high-pressure conditions, addition of a large amount of hydrogen, severe reaction conditions such as high reaction temperature, and dilution with inert solvent are required in production of an α-olefin polymer having a specific viscosity. Each of R¹ to R⁶ is preferably a hydrogen atom or a C1 to C20 alkyl group, more preferably a hydrogen atom or a C1 to C4 alkyl group. At least one group selected from among R¹ to R³ is a hydrogen atom, and at least one group selected from among R⁴ to R⁶ is a hydrogen atom. The case where any of R¹ to R³ is not a hydrogen atom, or the case where any of R⁴ to R⁶ is not a hydrogen atom is not preferred, since high-pressure conditions, addition of a large amount of hydrogen, severe reaction conditions such as high reaction temperature, and dilution with inert solvent are required in production of an α-olefin polymer having a specific viscosity.
Each of R^{a} and R^{b} is a divalent group in which two cyclopentadienyl rings are bound via 1 to 3 atoms, and is preferably a group represented by formula (II).

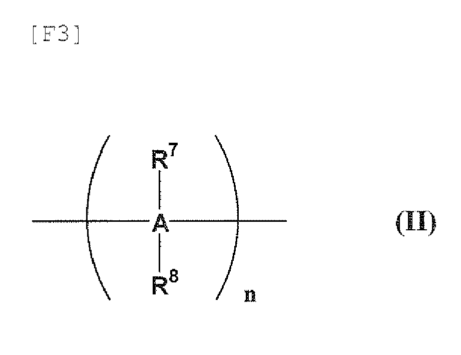

In formula (II), n is an integer of 1 to 3. Each of R⁷ and R⁸ represents a hydrogen atom, a halogen atom, a C1 to C20 hydrocarbyl group, or a C1 to C20 halogen-containing hydrocarbyl group, and is preferably a hydrogen atom or a C1 to C4 hydrocarbyl group, more preferably a hydrogen atom or a C1 to C4 alkyl group. A represents an atom belonging to the group 14 of the periodic table. Examples of preferred groups of and R^{b} include -CR⁷R⁸-, -SiR⁷R⁸-, and -CR⁷R⁸-CR⁷R⁸-.
Each of X¹ and X², which are σ-bonding ligands, represents a hydrogen atom, a halogen atom, a C1 to C20 hydrocarbyl group, or a C1 to C20 organic group containing at least one element selected from among a halogen atom, a silicon atom, an oxygen atom, a sulfur atom, a nitrogen atom, and a phosphorus atom. Examples of preferred groups of X¹ and X² include a halogen atom. M represents a transition metal belonging to group 4 to group 6 in the periodic table and is preferably a group 4 transition metal.

Examples of the compound represented by formula (I) include dichloride compounds such as (1,1'-ethylene)(2,2'-ethylene)biscyclopentadienylzirconium dichloride, (1,1' - ethylene)(2,2'-ethylene)bis(3-methylcyclopentadienyl) zirconium dichloride, (1,1' - ethylene)(2,2'-ethylene)bis(4-methylcyclopentadienyl) zirconium dichloride, (1,1'-ethylene)(2,2'-ethylene)bis(3,4-dimethylcyclopentadienyl) zirconium dichloride, (1,1'-ethylene)(2,2'-ethylene)bis(3,5-dimethylcyclopentadienyl) zirconium dichloride, (1,1'-dimethylsilylene) (2,2'-dimethylsilylene)biscyclopentadienylzirconium dichloride, (1,1'-dimethylsilylene) (2,2'-dimethylsilylene) bis (3-methylcyclopentadienyl) zirconium dichloride, (1,1'-dimethylsilylene) (2,2'-dimethylsilylene)bis(4-methylcyclopentadienyl)zirconium dichloride, (1,1'-dimethylsilylene)(2,2'-dimethylsilylene)bis(3,4-dimethylcyclopentadienyl) zirconium dichloride, (1,1'-dimethylsilylene)(2,2'-dimethylsilylene)bis(3,5-dimethylcyclopentadienyl) zirconium dichloride, (1,1'-dimethylsilylene)(2,2'-ethylene)biscyclopentadienylzirconium dichloride, (1,1'-dimethylsilylene) (2,2'-ethylene)bis(3-methylcyclopentadienyl) zirconium dichloride, (1,1'-dimethylsilylene) (2,2'-ethylene) bis 4-methylcyclopentadienyl)zirconium dichloride, (1,1'-dimethylsilylene) (2,2'-ethylene) bis (3,4-dimethylcyclopentadienyl)zirconium dichloride, (1,1'-dimethylsilylene)(2,2'-ethylene)bis(3,5-dimethylcyclopentadienyl)zirconium dichloride, (1,1'-isopropylidene)(2,2'-dimethylsilylene)biscyclopentadienylzirconium dichloride, (1,1'-isopropylidene) (2,2'-dimethylsilylene) bis (3-methylcyclopentadienyl)zirconium dichloride, (1,1' - isopropylidene)(2,2'-dimethylsilylene)bis(4-methylcyclopentadienyl)zirconium dichloride, (1,1'-iscuropylidene)(2,2'-dimethylsilylene)bis(3,4-dimethylcyclopentadienyl) zirconium dichloride, (1,1'-isopropylidene)(2,2'-dimethylsilylene)bis(3,5-dimethylcyclopentadienyl) zirconium dichloride, (1,1'-isopropylidene)(2,2'-isopropylidene)bis(3-methylcyclopentadienyl)zirconium dichloride, (1,1'-isopropylidene)(2,2'-isopropylidene)bis(4-methylcyclopentadienyl) zirconium dichloride, (1,1'-isopropylidene)(2,2'-isopropylidene)bis(3,4-dimethylcyclopentadienyl)zirconium dichloride, and (1,1'-isopropylidene)(2,2'-isopropylidene)bis(3,5-dimethylcyclopentadienyl) zirconium dichloride. Examples also include dimethyl forms, diethyl forms, dihydro forms, diphenyl forms, and dibenzyl forms of these complexes, and titanium analogues and hafnium analogues.

The transition metal compounds serving as component (A) may be used singly or in combination of two or more species.

Examples of the organic aluminumoxy compound (b-1) serving as component (B) include chain aluminoxanes represented by formula (III):

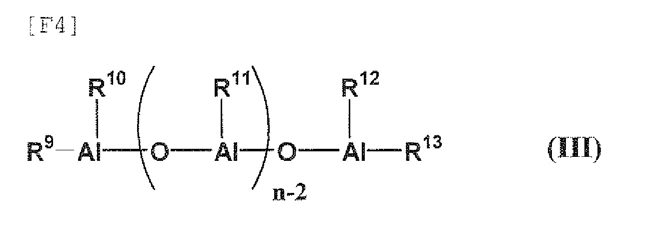

and cyclic aluminoxanes represented by formula (IV).

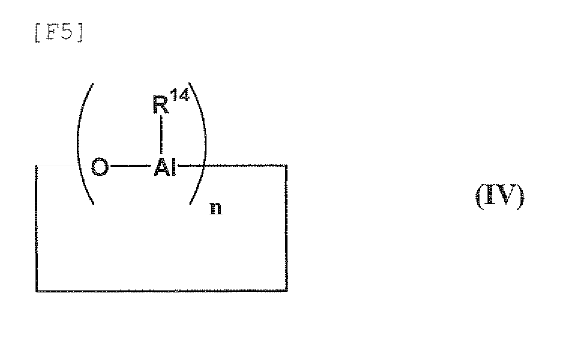

In formula (III) and (IV), each of R⁹ to R¹⁴ represents a C1 to C20 (preferably C1 to C12) hydrocarbyl group or a halogen atom. Examples of the hydrocarbyl group include an alkyl group, an alkenyl group, an aryl group, and an arylalkyl group. The parameter "n" represents a polymerization degree and is generally an integer of 2 to 50, preferably 2 to 40. Groups R⁹ to R¹⁴ may be identical to or different from one another.

Examples of the aluminoxane include methylaluminoxane, ethylaluminoxane, and isobutylaluminoxane.

No particular limitation is imposed on the method of producing the aforementioned aluminoxane, and a known method may be applied. For example, alkylaluminum is brought into contact with a condensing agent (e.g., water). In one method, an organic aluminum compound is dissolved in an organic solvent, and the solution is brought into contact with water. In another method, an organic aluminum compound is added to a polymerization system, and then water is added thereto. In still another method, crystallization water included in a metal salt or the like, or water adsorbed to an inorganic or organic is caused to react with an organic aluminum compound. In yet another method, trialkylaluminum is sequentially reacted with tetraalkyldialuminoxane and water. Notably, the aluminoxane may be insoluble in toluene. These aluminoxanes may be used singly or in combination of two or more species.

Any compound may be employed as component (b-2), so long as the compound is an ionic compound which can transform into a cation through reaction with the transition metal compound serving as the aforementioned component (A). Among such compounds, preferably employed are compounds represented by the following formula (V) and (VI):

([L¹-R¹⁵]^{k+})ₐ([Z]⁻)_{b} (V)

([L²]^{k+})ₐ ([Z]⁻)_{b} (VI).

In formula (V) , L¹ represents a Lewis base; and R¹⁵ represents a hydrogen atom, a C1 to C20 alkyl group or a C6 to C20 hydrocarbyl group selected from among an aryl group, an alkylaryl group, and an arylalkyl group.

Specific examples of the group L¹ include amines such as ammonia, methylamine, aniline, dimethylamine, diethylamine, N-methylaniline, diphenylamine, N,N-dimethylaniline, trimethylamine, triethylamine, tri-n-butylamine, methyldiphenylamine, pyridine, p-bromo-N,N-dimethylaniline, and p-nitro-N,N-dimethylaniline; phosphines such as triethylphosphine, triphenylphosphine, and diphenylphosphine; thioethers such as tetrahydrothiophene; esters such as ethyl benzoate; and nitriles such as acetonitrile and benzonitrile. Specific examples of the group R¹⁵ include a hydrogen atom, a methyl group, an ethyl group, a benzyl group, and a trityl group.

In formula (VI) , L² represents M¹, R¹⁶R¹⁷M², R¹⁸C, or R¹⁹M². Each of R¹⁶ and R¹⁷ represents a cyclopentadienyl group, a substituted cyclopentadienyl group, an indenyl group, or a fluorenyl group. R¹⁸ represents a C1 to C20 alkyl group, or a a C6 to C20 hydrocarbyl group selected from among an aryl group, an alkylaryl group, and an arylalkyl group. R¹⁹ represents a large cyclic ligand such as tetraphenylporphyrin and phthalocyanine.
M¹ represents an element belonging to any of group 1 to group 3, group 11 to group 13, and group 17 of the periodic table, and M² represents an element belonging to group 7 to group 12 of the periodic table.

Specific examples of the group R¹⁶ or R¹⁷ include a cyclopentadienyl group, a methylcyclopentadienyl group, an ethylcyclopentadienyl group, and a pentamethylcyclopentadienyl group. Specific examples of the group R¹⁸ include a phenyl group, a p-tolyl group, and a p-methoxyphenyl group. Specific examples of the group R¹⁹ include tetraphenylporphyrin and phthalocyanine. Specific examples of the group M¹ include Li, Na, K, Ag, Cu, Br, I, and I₃, and specific examples of the group M² include Mn, Fe, Co, Ni, and Zn.

In formulas (V) and (VI), k represents an ion valence of [L¹-R¹⁵] and [L²], and is an integer of 1 to 3; a is an integer of 1 or more; and b is (kxa).
[Z]⁻ represents a non-coordinating anion [Z¹]⁻ or [Z²]⁻.
[Z¹]⁻ represents an anion in which a plurality of groups are bonded to an element; i.e., [M³G¹G²···G^{f}]⁻. M³ represents an element belonging to group to group 15 (preferably group 13 to group 15) of the periodic table. Each of G¹ to G^{f} represents a hydrogen atom, a halogen atom, a C1 to C20 alkyl group, a C2 to C40 dialkylamino group, a C1 to C20 alkoxy group, a C6 to C20 aryl group, a C6 to C20 aryloxy group, a C7 to C40 alkylaryl group, a C7 to C40 arylalkyl group, a C1 to C20 halo-substituted hydrocarbyl group, a C1 to C20 acyloxy group or organic metalloid group, or a C2 to C20 heteroatom-containing hydrocarbyl group. Two or more groups of G¹ to G^{f} may form a ring structure. The "f" represents an integer [(valence of center metal M³) +1 ] .
[Z²]⁻ represents a conjugate base of a Broensted acid having a pKa (logarithm of reciprocal acid dissociation constant) of -10 or lower, a conjugate base of the Broensted acid and a Lewis acid, or a conjugate base of a generally defined super-strong acid. To the conjugate base, a Lewis base may be coordinated.

Specific examples of the group M³ of [Z¹]⁻; i.e., [M³G¹G²···G^{f}]⁻, include B, Al, Si, P, As, and Sb. Among them, B and Al are preferred. Specific examples of the groups G¹ and G² to G^{f} include dialkylamino groups such as dimethylamino and diethylamino; alkoxy or aryloxy groups such as methoxy, ethoxy, n-propoxy, and phenoxy; hydrocarbyl groups such as methyl, ethyl, n-propyl, isopropyl, n-butyl, isobutyl, n-octyl, n-eicosyl, phenyl, p-tolyl, benzyl, 4-t-butylphenyl, and 3,5-dimethylphenyl; halogen atoms such as fluorite, chlorine, bromine, and iodine; heteroatom-containing hydrocarbyl groups such as p-fluorophenyl, 3,5-difluorophenyl, pentachlorophenyl, 3,4,5-trifluorophenyl, pentafluorophenyl, 3,5-bis(trifluoromethyl)phenyl, and bis(trimethylsilyl)methyl; organic metalloid groups such as pentamethylantimony, trimethylsilyl, trimethylgermyl, diphenylarsine, dicyclohexylantimony, and diphenylboron.

Specific examples of the conjugate base [Z²]⁻ of a Broensted acid having a pKa (logarithm of reciprocal acid dissociation constant) of -10 or lower or the conjugate base of the Broensted acid and a Lewis acid include trifluoromethane sulfonate anion (CF³SO₃)⁻, bis(trifluoromethanesulfonyl)methyl anion, bis(trifluoromethanesulfonyl)benzyl anion, bis(trifluoromethanesulfonyl)amide, perchlorate anion (ClO₄)⁻, trifluoroacetate anion (CF₃CCO)⁻, hexafluoroantimonate anion (SbF₆)⁻, fluorosulfonate anion (FSO₃)⁻, chlorosulfonate anion (ClSO₃)⁻, fluorosulfonate anion/pentafluoroantimonate anion (FSO₃/SbF₅)⁻, fluorosulfonate anion/pentafluoroarsenate anion (FSO₃/AsF₅)⁻, and trifluoromethanesulfonate anion/pentafluoroantominate anion (CF₃SO₃/SbF₅)⁻.

Specific examples of such compounds of component (b-2) include triethylammonium tetraphenylborate, tri-n-butylammonium tetraphenylborate, trimethylammonium tetraphenylborate, tetraethylammonium tetraphenylborate, methyl(tri-n-butyl)ammonium tetraphenylborate, benzyl(tri-n-butyl) ammonium tetraphenylborate, dimethyldiphenylammonium tetraphenylborate, triphenyl(methyl)ammonium tetraphenylborate, trimethylanilinium tetraphenylborate, methylpyridinium tetraphenylborate, benzylpyridinium tetraphenylborate, methyl (2-cyanopyridinium) tetraphenylborate, triethylammonium tetrakis(pentafluorophenyl)borate, tri-n-butylammonium tetrakis(pentafluorophenyl)borate, tri-n-butylammonium tetrakis(pentafluorophenyl)borate, triphenylammonium tetrakis(pentafluorophenyl)borate, tetra-n-butylammonium tetrakis(pentafluorophenyl)borate, tetraethylammonium tetrakis(pentafluorophenyl)borate, benzyl(tri-n-butyl)ammonium tetrakis(pentafluorophenyl)borate, methyldiphenylammonium tetrakis(pentafluorophenyl)borate, triphenyl(methyl)ammonium tetrakis(pentafluorophenyl)borate, methylanilinium tetrakis(pentafluorophenyl)borate, dimethylanilinium tetrakis(pentafluorophenyl)borate, trimethylanilinium tetrakis(pentafluorophenyl)borate, methylpyridinium tetrakis(pentafluorophenyl)borate, benzylpyridinium tetrakis(pentafluorophenyl)borate, methyl(2-cyanopyridinium) tetrakis(pentafluorophenyl)borate, benzyl(2-cyanopyridinium) tetrakis(pentafluorophenyl)borate, methyl(4-cyanopyridinium) tetrakis(pentafluorophenyl)borate, triphenylphosphonium tetrakis(pentafluorophenyl)borate, dimethylanilinium tetrakis[bis(3,5-ditrifluoromethyl)phenyl]borate, ferrocenium tetraphenylborate, silver tetraphenylborate, trityl tetraphenylborate, tetraphenylporphyrinmanganese tetraphenylborate, ferrocenium tetrakis(pentafluorophenyl)borate, (1,1'-dimethylferrocenium) tetrakis(pentafluorophenyl)borate, decamethylferrocenium tetrakis(pentafluorophenyl)borate, silver tetrakis(pentafluorophenyl)borate, trityl tetrakis(pentafluorophenyl)borate, lithium tetrakis(pentafluorophenyl)borate, sodium tetrakis(pentafluorophenyl)borate, tetraphenylporphyrinmanganese tetrakis(pentafluorophenyl)borate, silver tetrafluoroborate, silver hexafluorophosphate, silver hexafluoroarsenate, silver perchlorate, silver trifluoroacetate, and silver trifluoromethanesulfonate.

The compounds serving as component (b-2) may be used singly or in combination of two or more species. When component (b-1) is employed as component (B), the ratio by mole of amount of component (A) to amount of component (B) is preferably 1 : 1 to 1 : 1,000,000, more preferably 1 : 10 to 1 : 10,000. When component (b-2) is employed, the ratio by mole of amount of component (A) to amount of component (B) is preferably 10 : 1 to 1 : 100, more preferably 2 : 1 to 1 : 10. As component (B), compounds serving as (b-1) and those serving as (b-2) may be used singly or in combination of two or more species.

The aforementioned catalyst may contain, as predominant ingredients, the aforementioned components (A) and (B), or may contain, as predominant ingredients, the aforementioned components (A) and (B) and (C) an organic aluminum compound. The organic aluminum compound serving as component (C) and employed in the invention is a compound represented by formula (VII):

(R²⁰)ᵥAlQ₃₋ᵥ (VII)

(wherein R²⁰ represents a C1 to C10 alkyl group; Q represents a hydrogen atom, a C1 to C20 alkoxy group, a C6 to C20 aryl group, or a halogen atom; and v is an integer of 1 to 3).

Specific examples of the compound represented by formula (VII) include trimethylaluminum, triethylaluminum, triisopropylaluminum, triisobutylaluminum, dimethylaluminum chloride, diethylaluminum chloride, methylaluminum dichloride, ethylaluminum dichloride, dimethylaluminum fluoride, diisobutylaluminum hydride, diethylaluminum hydride, and ethylaluminum sesquichloride. These organic aluminum compounds may be used singly or in combination of two or more species. The ratio by mole of amount of component (A) to amount of component (C) is preferably 1 : 1 to 1 : 10, 000, more preferably 1 : 5 to 1 : 2,000, still more preferably 1 : 10 to 1 : 1,000. Although use of component (C) results in enhancement in catalytic activity on the basis of the amount of transition metal, when the organic aluminum compound is used in an excessive amount, the excess compound cannot be utilized, and a large amount thereof remains in the formed α-olefin polymer, which is not preferred.

In use the aforementioned catalyst, at least one catalyst component may be supported by an appropriate carrier. No particular limitation is imposed on the type of the carrier, and any of inorganic oxide carriers and other inorganic and organic carriers may be employed. Among them, an inorganic oxide carrier and a non-oxide inorganic carrier are preferred, from the viewpoint of control of the morphology.

Specific examples of the inorganic oxide carrier include SiO₂, Al₂O₃, MgO, ZrO₂, TiO₂, Fe₂O₃, B₂O₃, CaO, ZnO, BaO, ThO₂ and mixtures thereof (e.g., silica-alumina, zeolite, ferrite, and glass fiber) Among them, SiO₂ and Al₂O₃ are particularly preferred. The inorganic oxide carrier may contain a small amount of a carbonate salt, a nitrate salt, a sulfate salt, or the like. Examples of the non-oxide carrier include magnesium compounds and complexes thereof represented by Mg(R²¹)ₐX_{b}, typically being magnesium compounds such as MgCl₂ and Mg(OC₂H₅)₂. In the formula, R²¹ represents a C1 to C20 alkyl group, a C1 to C20 alkoxy group, or a C6 to C20 aryl group; X represents a halogen atom or a C1 to C20 alkyl group; a is 0 to 2; b is 0 to 2; and a + b is 2. A plurality of R²¹ or X may be identical to or different from one another.

Examples of the organic carrier include polymers such as polystyrene, styrene-divinylbenzene copolymer, polyethylene, polypropylene, substituted polystyrene, and polyarylate; starch; and carbon. The carrier employed in the aforementioned catalyst is preferably MgCl₂, MgCl (OC₂H₅), Mg(OC₂H₅)₂, SiO₂, Al₂O₃, etc. The carrier generally has a dimensional characteristic (mean particle size), which varies depending on the type and production method, of 1 to 300 µm, preferably 10 to 200 µm, more preferably 20 to 100 µm. When the particle size is small, the amount of micropowder in the formed α-olefin polymer increases, whereas when the particle size is large, the amount of coarse particles in the α-olefin polymer increases, thereby causing reduction in bulk density and plugging of a hopper. Also, the carrier generally has a specific surface area of 1 to 1,000 m²/g, preferably 50 to 500 m²/g, a micropore volume of 0.1 to 5 cm³/g, preferably 0.3 to 3 cm³/g. In the case where one of the specific surface area and micropore volume falls outside the corresponding range, the catalytic activity may decrease. The specific surface area and micropore volume may be determined from, for example, the volume of nitrogen gas adsorbed by the carrier through the BET method (see J. Am. Chem. Soc., 60, 309 (1983)). Before use, the carrier is generally fired at 150 to 1,000°C, preferably 200 to 800°C.

When at least one catalyst component is caused to be supported by the aforementioned carrier, at least one of components (A) and (B), preferably both components (A) and (B) are supported. No particular limitation is imposed on the method for supporting at least one of components (A) and (B), and there may be employed the following methods: a method in which at least one of components (A) and (B) is mixed with the carrier; a method in which the carrier is treated with an organic aluminum compound or a halogen-containing silicon compound, and the product is mixed with at least one of components (A) and (B) in an inert solvent; a method in which the carrier is reacted with component (A) and/or component (B) and with an organic aluminum compound or a halogen-containing silicon compound; a method in which component (A) or component (B) is caused to be supported by the carrier, and the carrier is mixed with component (B) or component (A); a method in which a contact reaction product between component (A) and component (B) is mixed with the carrier; and a method in which the contact reaction between component (A) and component (B) is performed in the co-presence of the carrier. In the above reaction, the organic aluminum compound (C) may be added to the reaction system.

Before use in polymerization, the thus-produced catalyst may be separated as a solid through evaporation of solvent, or the catalyst as is may be used. In the catalyst preparation, the catalyst may be produced by at least one of components (A) and (B) is caused to be supported on the carrier in the polymerization system. In one specific procedure, an olefin (e.g., ethylene) is subjected to preliminary polymerization for about 1 minute to about 2 hours at -20°C to 200°C under normal pressure to 2 MPa in the presence of at least one of components (A) and (B), the carrier, and an optional organic aluminum compound (C), to thereby form catalyst particles.

The ratio by mass of component (b-1) to the carrier is preferably 1 : 0.5 to 1 : 1,000, more preferably 1 : 1 to 1 : 50, and the ratio by mass of component (b-2) to the carrier is preferably 1 : 5 to 1 : 10,000, more preferably 1 : 10 to 1 : 500. In the case where two or more species are employed in combination as catalyst component (B), the ratio by mass of each component (B) species to the carrier preferably falls within the aforementioned range. The ratio by mass of component (A) to the carrier is preferably 1 : 5 to 1 : 10,000, more preferably 1 : 10 to 1 : 500. The catalyst employed in polymerization may contain the aforementioned components (A), (B), and (C), as predominant ingredients. Preferably, the ratio by mass of component (B) to the carrier and the ratio by mass of component (A) to the carrier fall within the aforementioned ranges. In this case, as mentioned above, the ratio by mole of amount of component (C) to amount of component (A) is preferably 1 : 1 to 1 : 10,000, more preferably 1 : 5 to 1 : 2,000, still more preferably 1 : 10 to 1 : 1,000. In the case where the ratio of component (B) (component (b-1) or (b-2)) to carrier, the ratio of component (A) to carrier, or the ratio of component (C) to component (A) falls outside the aforementioned range, the catalytic activity may be reduced. The thus-prepared catalyst generally has a mean particle size of 2 to 200 µm, preferably 10 to 150 µm, particularly preferably 20 to 100 µm, a specific surface area of 20 to 1,000 m²/g, preferably 50 to 500 m²/g. When the mean particle size is smaller than 2 µm, the amount of micropowder in the formed polymer may increase, whereas when the particle size is in excess of 200 µm, the amount of coarse particles in the polymer may increase. When the specific surface area is less than 20 m²/g, the catalytic activity may decrease, whereas when the specific surface area is in excess of 1,000 m²/g, the bulk density of the formed polymer may decrease. In the aforementioned catalyst, the carrier (100 g) generally contains transition metal in an amount of 0.05 to 10 g, particularly preferably 0.1 to 2 g. When the transition metal content falls outside the range, the catalytic activity may decrease. Through supporting the catalyst component(s) on such a carrier, industrially advantageous production method can be realized.

No particular limitation is imposed on the polymerization method employing the aforementioned catalyst, and any polymerization method such as bulk polymerization, solution polymerization, suspension polymerization, slurry polymerization, or vapor-phase polymerization may be employed. Regarding polymerization conditions, the polymerization temperature is generally 0 to 200°C, preferably 30 to 150°C, more preferably 40 to 120°C. The amount of catalyst employed with respect to the raw material monomer, i.e., raw material monomer/component (A) (by mole) is preferably 1 to 10⁸, particularly preferably 100 to 10⁵. The time of polymerization is generally 5 minutes to 20 hours, and the pressure at the reaction is preferably normal pressure to 0.2 MPaG, particularly preferably normal pressure to 0.1 MPaG.

The method for producing an α-olefin oligomer employing the aforementioned catalyst is preferably carried out in the absence of solvent, from the viewpoint of productivity. However, a solvent may also be used. Examples of the solvent which may be employed in the production method include aromatic hydrocarbons such as benzene, toluene, xylene, and ethylbenzene; alicyclic hydrocarbons such as cyclopentane, cyclohexane, and methylcyclohexane; aliphatic hydrocarbons such as pentane, hexane, heptane, and octane; halogenated hydrocarbon such as chloroform and dichloromethane. These solvent may be used singly or in combination of two or more species. Alternatively, a monomer such as 1-butene may be employed as a solvent.

In the method for producing an α-olefin polymer employing the aforementioned catalyst, the catalytic activity is enhanced by adding hydrogen to the C6 to C20 α-olefin polymerization system. When hydrogen is used, the pressure thereof is generally 0.2 MPaG or lower, preferably 0.001 to 0.1 MPaG, more preferably 0.01 to 0.1 MPaG.

In the method for producing an α-olefin polymer employing the aforementioned catalyst, preliminary polymerization may be carried out in the presence of the aforementioned catalyst. Preliminary polymerization may be carried out through, for example, causing a small amount of olefin into contact with the catalyst component(s). However, no particular limitation is imposed the method, and any known method may be employed. No particular limitation is imposed on the olefin used in preliminary polymerization, and examples of the olefin include ethylene, a C3 to C20 α-olefin, and mixtures thereof. In an advantageous manner, the same olefin as employed in the main polymerization is used. Preliminary polymerization is generally performed at -20 to 200°C, preferably -10 to 130°C, more preferably 0 to 80°C. In the preliminary polymerization, a solvent such as an inert hydrocarbon, an aliphatic hydrocarbon, an aromatic hydrocarbon, a monomer, etc. may be used. Among them, an aliphatic hydrocarbon is particularly preferred. Alternatively, the preliminary polymerization may be performed in the absence of solvent. Preferably, preliminary polymerization conditions are tuned such that the amount of preliminary polymerization product with respect to 1 mmol of the transition metal component in the catalyst is adjusted to 1 to 10,000 g, particularly preferably 1 to 1,000 g.

In the production method of the present invention, the molecular weight of the formed polymer is controlled by selecting the type and amount of each catalyst component or polymerization temperature or by adding hydrogen or an inert gas (e.g., nitrogen) to the polymerization system.

After completion of the aforementioned production step, the α-olefin polymer employed in the present invention may be purified by removing C≤24 α-olefin compounds (α-olefin and α-olefin oligomers). Examples of the removal method include distillation under reduced pressure.
In order to enhance the stability of the lubricating oil for gears, the α-olefin polymer is preferably subjected to hydrogenation treatment. No particular limitation is imposed on the hydrogenation, and any known technique may be employed.

When polymerization is performed in the presence of the catalyst containing the aforementioned components (A) and (B), isomerization is more effectively suppressed, as compared to conventional Friedel Crafts reaction. Therefore, the formed α-olefin polymer exhibits enhanced oxidation resistance and has high viscosity index and high fluidity, at low temperature. Thus, the α-olefin polymer is particularly preferred as an ingredient of a lubricating oil for gears.

The lubricating oil for gears of the present invention contains the aforementioned α-olefin polymer and has a viscosity index of 170 or higher. Since the lubricating oil for gears has a viscosity index of 170 or higher, malfunction during start-up at low temperature can be suppressed. No particular limitation is imposed on the upper limit of the viscosity index. For example, according to the present invention, a lubricating oil for gears having a viscosity index of 300 or less can be produced.
Thus, the lubricating oil for gears of the present invention attains such a high viscosity index without containing a viscosity index improver. Therefore, the lubricating oil of the invention exhibits excellent shear stability.
The lubricating oil for gears of the present invention preferably has a kinematic viscosity at -20°C of 20,000 m²/s or lower. Under the conditions, malfunction during start-up at low temperature can be suppressed. From this viewpoint, the kinematic viscosity at -20°C is more preferably 18,000 mm²/s or less, particularly preferably 17,000 mm²/s or less. For gaining an appropriate lube action, the lubricating oil for gears of the present invention preferably has a kinematic viscosity at 40°C of 300 to 340 mm²/s.

So long as the object of the present invention is not impaired, the lubricating oil for gears of the present invention may be mixed with a conventionally known base oil in use or may further contain various additives.
Either mineral oil or synthetic oil may be used as a base oil. Examples of the mineral oil include paraffin-base mineral oil, intermediate mineral oil, and naphthene-base mineral oil. Specific examples include solvent-refined or hydrogenated light neutral oil, medium neutral oil, heavy neutral oil, and bright stock. Examples of the synthetic oil which may be employed include polybutene, polyol ester, dibasic acid esters, phosphate esters, polyphenyl ethers, alkylbenzenes, alkylnaphthalenes, polyoxyalkylene glycols, neopentyl glycol, silicone oil, trimethylolpropane, pentaerythritol, and hindered esters. These base oils may be used singly or in combination of two or more species, and mineral oil and synthetic oil may be used in combination.
Examples such additives include an extreme pressure agent, an oiliness agent, an anti-wear agent, an ashless detergent-dispersant, an antioxidant, a rust inhibitor, a metal deactivator, a viscosity index improver, a pour point depressant, and a defoaming agent.

Examples of the extreme pressure agent, the oiliness agent, and the anti-wear agent include sulfur compounds such as olefin sulfide, dialkyl polysulfide, diarylalkyl polysulfide, and diaryl polysulfide; phosphorus compounds such as acidic phosphate esters, phosphate esters, thiophosphate esters, phosphite esters, alkyl hydrogenphosphites, and amine salts thereof; chlorine compounds such as chlorinated fats and oils, chlorinated paraffins, chlorinated fatty acid esters, and chlorinated fatty acids; ester compounds such as maleic acid alkyl or alkenyl esters, succinic acid alkyl or alkenyl esters, and polyol esters; organic acid compounds such as alkyl or alkeylmaleic acids and alkyl or alkenylsuccinic acids; and organometallic compounds such as naphthenate salts, zinc dithiophosphate (ZnDTP), zinc dithiocarbamate (ZnDTC), molybdenum oxysulfide organophosphorodithioate (MoDTP), and molybdenum oxysulfide dithiocarbamate (MoDTC).

Examples of the ashless detergent-dispersant include succinimides, boron-containing succinimides, benzylamines, boron-containing benzylamines, succinate esters, and mono- or divalent carboxamides including fatty acid amides and succinamides.

The antioxidant employed may be an amine-based antioxidant, a phenol-based antioxidant, or a sulfur-containing antioxidant, which are conventionally employed in lubricating oil. These antioxidants may be used singly or in combination of two or more species. Examples of the amine-based antioxidant include monoalkyldiphenylamine compounds such as monooctyldiphenylamine and monononyldiphenylamine; dialkyldiphenylamine compounds such as 4,4'-dibutyldiphenylamine, 4,4'-dipentyldiphenylamine, 4,4'-dihexyldiphenylamine, 4,4'-diheptyldiphenylamine, 4,4'-dioctyldiphenylamine, and 4,4'-dinonyldiphenylamine; polyalkyldiphenylamine compounds such as tetrabutyldiphenylamine, tetrahexyldiphenylamine, tetraoctyldiphenylamine, and tetranonyldiphenylamine; and naphthylamine compounds such as α-naphthylamine, phenyl-α-naphthylamine, butylphenyl-α-naphthylamine, pentylphenyl-α-naphthylamine, hexylphenyl-α-naphthylamine, heptylphenyl-α-naphthylamine, octylphenyl-α-naphthylamine, and nonylphenyl-α-naphthylamine.

Examples of the phenol-based antioxidant include monophenol compounds such as 2,6-di-tert-butyl-4-methylphenol, 2,6-di-tert-butyl-4-ethylphenol, and octadecyl 3-(3,5-di-tert-butyl-4-hydroxyphenyl)propionate; and diphenol compounds such as 4,4'-methylenebis(2,6-di-tert-butylphenol) and 2,2'-methylenebis(4-ethyl-6-tert-butylphenol).
Examples of the sulfur-containing antioxidant include 2,6-di-tert-butyl-4-(4,6-bis(octylthio)-1,3,5-triazin-2-ylamino)phenol; thioterpene compounds such as a reaction product between phosphorus pentasulfide and pinene; and dialkyl thiodipropionates such as dilauryl thiodipropionate and distearyl thiodipropionate.

Examples of the rust inhibitor include metal sulfonates and succinic acid esters, and examples of the metal deactivator include benzotriazole and thiadiazole.
Examples of the viscosity index improver include polymethacrylates, dispersion-type polymethacrylates, olefin copolymers (e.g., ethylene-propylene copolymer), dispersion-type olefin copolymers, and styrene copolymers (e.g., styrene-diene hydrogenated copolymer).
Examples of the pour point depressant which may be employed in the invention include polymethacrylates having a weight average molecular weight of about 50,000 to about 150,000.
The defoaming agent is preferably a high-molecular-weight silicone defoaming agent or a polyacrylate defoaming agent. Incorporation of a defoaming agent such as a high-molecular-weight silicone defoaming agent into the composition of the invention effectively attains defoaming property.
Examples of the high-molecular-weight silicone defoaming agent include organopolysiloxanes. Of these, fluorine-containing organopolysiloxanes such as trifluoropropylmethyl silicone oil are particularly preferred.

The lubricating oil for gears of the present invention is a lubricating oil having a high viscosity index and exhibiting excellent shear stability and oxidation resistance. Thus, the lubricating oil is preferably employed as, for example, an automotive gear oil and an industrial gear oil, particularly preferably as a wind power generation step-up gear.

### Examples

The present invention will next be described in more detail by way of examples, which should not be construed as limiting the invention thereto.

### Production Example 1

To a stainless steel autoclave (capacity: 5 L) purged with nitrogen, 1-decene (2.5 L), which had been degassed and dehydrate through nitrogen bubbling in advance, was fed. The temperature of the autoclave was elevated to 105°C, and a 1.0-mol/L triisobutylaluminum/toluene solution (6.3 mL) and a 10-mmol/Z N,N-dimethylanilinium tetrakis(pentafluorophenyl)borate/toluene suspension (5 mL) were added to the autoclave.
Subsequently, a 10-mmol/L (1,1'-dimethylsilylene) (2,2'-dimethylsilylene)-bis(cyclopentadienyl)zirconium dichloride/toluene solution (2.5 mL) was added to the autoclave, and the contents were allowed to react at 105°C for 6 hours, while hydrogen (50 kPa) was continuously added thereto.
In the above reaction, the ratio of metallocene compound to 1-decene was 0.025 mmol/L(1-decene); the ratio by mole of triisobutylaluminum/metallocene compound was 100; and the ratio by mole of borate compound/metallocene compound was 2. The reaction was terminated with 1% dilute HCl (500 mL), and the reaction product was washed twice with deionized water (100 mL), whereby the remaining catalysts components were decomposed and removed from the reaction product. The element analysis of the obtained solution revealed that all the Cl level, Al level, and Zr level were less than 2 mass ppm, indicating that the product contained substantially no catalyst residue.
The solution from which the decomposed catalyst components had been removed was distilled under reduced pressure, to thereby remove remaining monomers and dimers. Subsequently, the thus-treated solution was fed into a stainless steel autoclave (capacity: 5 L) purged with nitrogen, and a palladium/alumina catalyst (5% Pd-deposited) (1 mass%) was added to the autoclave. While hydrogen (0.8 MPa) was continuously fed thereto under stirring, reaction was performed at 85°C for 5 hours. After completion of reaction, the reaction mixture was filtered through filter paper (No. 2), to thereby remove the catalyst and yield a target product.

### Production Example 2

A stainless steel autoclave (capacity: 2 L) was sufficiently dried and purged with nitrogen. Under nitrogen, 1-dodecene (780 mL) and 1-octene (420 mL) were added to the autoclave, and the temperature thereof was elevated to 105°C. Subsequently, under nitrogen, triisobutylaluminum (0.3 mmol) (1 mmol/mL toluene solution; 0.3 mL), (1,1'-dimethylsilylene) (2,2'-dimethylsilylene)-bis (cyclopentadienyl) zirconium dichloride (15 µmol) (5 µmol/mL toluene solution; 3 mL), and N,N-dimethylanilinium tetrakis (pentafluorophenyl) borate (60 µmol) (20 µmol/mL slurry in toluene; 3 mL) were added to the autoclave, and the mixture was stirred for a while. Then, hydrogen (0.05 MPaG) was fed thereto, and polymerization was initiated. The polymerization reaction was performed at 105°C for 120 minutes, and the polymerization was terminated through addition of methanol (10 mL) to the polymerization system. The contents were removed from the autoclave and added to 1 mass% aqueous NaOH (500 mL) with stirring. The solution was transferred to a separating funnel, to thereby recover an organic layer. The organic layer was washed with water and then, filtered through filter paper (2C, product of Toyo Roshi Kaisha, Ltd.), to thereby remove solid matter. From the thus-obtained solution, toluene, remaining raw materials, methanol, etc. were removed by means of a rotary evaporator (reduced pressure of about 1.0×10⁻⁴ MPa, oil bath at 100°C), to thereby yield a clear liquid (666 g). The liquid was further distilled under reduced pressure (5×10⁻⁶ MPa) at 180°C by means of a thin-film distillation (product of Sibata Scientific Technology Ltd., molecular distillation apparatus MS-300, with high-vacuum pumping system DS-212Z), to thereby yield a polymerization product (631 g), from which C≤24 component had been removed. The thus-obtained polymerization product was fed to a stainless steel autoclave (capacity: 2 L), and a stabilized nickel catalyst (SN750, product of Sakai Chemical Industry Co., Ltd.) was added thereto in an amount of 1 mass%. In the presence of hydrogen (2 MPa), the reaction system was allowed to react at 130°C for 6 hours. After completion of reaction, the temperature of the contents was lowered to about 80°C, and the contents were removed. The contents were filtered at 70°C through a 1-µm filter, to thereby yield 630 g of a target product.

### Preparation of lubricating oil

Lubricating oils having formulations (parts by mass) shown in Table 1 were prepared. In the preparation, the kinematic viscosity at 60°C of each lubricating oil was adjusted to about 125 mm²/s, in consideration of the temperature at use in practice. Table 2 shows the characteristics and performances of the prepared lubricating oils.

[Table 1]

**Table 1**

| | Ex. 1 | Ex. 2 | Comp. Ex. 1 | Comp. Ex. 2 | Comp. Ex. 3 |
|---|---|---|---|---|---|
| PAO1 | 86.16 | - | - | - | - |
| PAO2 | - | 86.16 | - | - | - |
| PAO3 | - | - | 86.16 | - | - |
| PAO4 | - | - | - | 56.16 | - |
| PMA | - | - | - | 30 | 70.16 |
| OCP | - | - | - | - | 16 |
| Ester | 10 | 10 | 10 | 10 | 10 |
| Additives | 3.84 | 3.84 | 3.84 | 3.84 | 3.84 |

The detailed information of the compounds shown in Table 1 is as follows.
PAO1: α-Olefin polymer produced in Production Example 1 (kinematic viscosity (40°C): 345.9 mm²/s, kinematic viscosity (100°C): 45.82 mm²/s, viscosity index 192)
PAO2: α-Olefin polymer produced in Production Example 2 (kinematic viscosity (40°C): 440.0 mm²/s, kinematic viscosity (100°C): 51.00 mm²/s, viscosity index 179)
PAO3: Durasyn 174 (product of INEOS Oligomers) (kinematic viscosity (40°C): 395 mm²/s, kinematic viscosity (100°C): 40 mm²/s, viscosity index 149)
PA04: Durasyn 172 (product of INEOS Oligomers) (kinematic viscosity (40°C): 63 mm²/s, kinematic viscosity (100°C): 9.8 mm²/s, viscosity index 139) PMA: Polymethacrylate (Mw: 3,700) diluted with PA04 (50 : 50) OCP: Lucant HC2000 (product of Mitsui Chemicals, Inc.) Ester: Ester between trimethylolpropane and isostearic acid (1 : 2 by mole)
Additives: (Octadecyl 3-(3,5-di-tert-butyl-4-hydroxyphenyl) propionate, and 4,4'-dioctyldiphenylamine, dialkylaminomethylbenzotriazole

[Table 2]

**Table 2**

| | Ex. 1 | Ex. 2 | Comp. Ex. 1 | Comp. Ex. 2 | Comp. Ex. 3 |
|---|---|---|---|---|---|
| Kinematic viscosity (40°C): mm²/s | 285.2 | 291.3 | 317.7 | 288.1 | 298.7 |
| Kinematic viscosity (100°C): mm²/s | 36.72 | 35-88 | 32.39 | 36.25 | 34.86 |
| Viscosity index | 178 | 171 | 142 | 175 | 163 |
| Kinematic viscosity (60°C): mm²/s | 124.8 | 124.9 | 124.8 | 124.7 | 124.9 |
| Kinematic viscosity (0°C): mm²/s | 2,995 | 3,286 | 4,934 | 3,140 | 3,683 |
| Kinematic viscosity (-10°C): mm²/s | 6,640 | 7,494 | 12,800 | 7,064 | 8,701 |
| Kinematic viscosity (-20°C): mm²/s | 16,500 | 19,300 | 38,500 | 17,900 | 23,400 |
| Kinematic viscosity (-30°C): mm²/s | 47,100 | 57,400 | 139,000 | 52,100 | 73,300 |
| Shear stability (40°C viscosity drop) | 0.0 | 0.0 | 0.0 | 6.4 | 0.8 |
| Shear stability (100°C viscosity drop) | 0.0 | 0.0 | 0.0 | 5.1 | 0.6 |
| Shell four ball test | 1,961 | 1,961 | 1,961 | 1,569 | 1,961 |
| RBOT | 2,320 | 2,650 | 2,180 | 1,680 | 1,460 |

The tests in the Examples were performed according to the following methods.
Kinematic viscosity and viscosity index: JIS K 2283
Shear stability: JPI-5S-29
Shell four ball test: ASTM D 2783
RBOT (rotating bomb oxidation test): JIS K 2514

### Industrial Applicability

The present invention enables provision of a lubricating oil for gears which has a high viscosity index, high shear stability, and high oxidation resistance. The lubricating oil for gears of the invention is preferably employed as a step-up gear oil for wind power generation. Thus, the employable low-temperature limit can be lowered, whereby the sites available for wind power generation increases.

## Claims

1. A lubricating oil for gears which contains an α-olefin polymer having a viscosity index of 175 or higher and which has a viscosity index of 170 or higher.

2. A lubricating oil for gears which contains an α-olefin polymer having a viscosity index of 180 or higher and which has a viscosity index of 175 or higher.

3. A lubricating oil for gears according to claim 1 or 2, wherein the α-olefin polymer is produced by polymerizing a C6 to C20 α-olefin.

4. A lubricating oil for gears according to any of claims 1 to 3, wherein the α-olefin polymer is produced in the presence of a metallocene catalyst.

5. A lubricating oil for gears according to claim 4,
wherein the metallocene catalyst includes (A) a transition metal compound represented by formula (I): 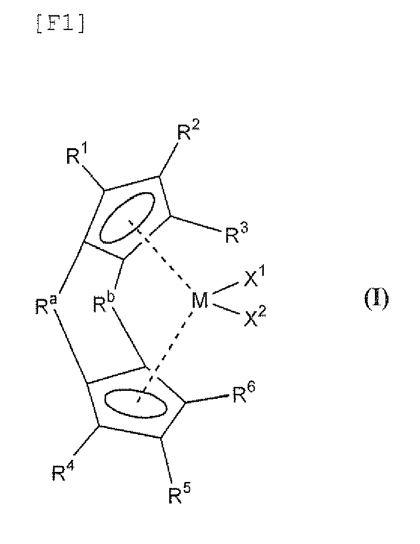 (wherein each of R¹ to R⁶ represents a hydrogen atom, a halogen atom, a C1 to C20 hydrocarbyl group, or a C1 to C20 organic group containing at least one element selected from among a halogen atom, a silicon atom, an oxygen atom, a sulfur atom, a nitrogen atom, and a phosphorus atom; at least one group selected from among R¹ to R³ is a hydrogen atom; at least one group selected from among R⁴ to R⁶ is a hydrogen atom; each of R³ and R^{b} represents a divalent group formed though bonding of two cyclopentadienyl rings via 1 to 3 atoms; each of X² and X² represents a hydrogen atom, a halogen atom, a C1 to C20 hydrocarbyl group, or a C1 to C20 organic group containing at least one element selected from among a halogen atom, a silicon atom, an oxygen atom, a sulfur atom, a nitrogen atom, and a phosphorus atom; and M represents a transition metal belonging to group 4 to group 6 in the periodic table) and (B) an organic aluminumoxy compound (b-1) and/or an ionic compound (b-2) which can transform into a cation through reaction with the transition metal compound.

6. A lubricating oil for gears according to any of claims 1 to 5, which is a lubricating oil for use with a step-up gear for wind power generation.
